# FASCICULE DE BREVET EUROPEEN

(11) **EP 3 056 782 B1**
(45) Date de publication et mention de la délivrance du brevet: **23.08.2017**
(21) Numéro de dépôt: 16154777.3
(22) Date de dépôt: 09.02.2016
(51) Int. Cl.: F16L 19/00, F16L 19/065, F16L 55/11

(54) **ORGANE DE RACCORDEMENT PORTE PAR UN CONDUIT, COMPORTANT UN EMBOUT MOBILE DE VERROUILLAGE POUR COUPLER LE CONDUIT A UN DEUXIEME CONDUIT**
ANSCHLUSSORGAN AUF EINER LEITUNG, DAS EIN BEWEGLICHES VERRIEGELUNGSENDSTÜCK ZUM VERBINDEN DER LEITUNG MIT EINER ZWEITEN LEITUNG UMFASST
CONNECTION MEMBER PROVIDED ON A PIPE, COMPRISING A MOVABLE LOCKING TIP FOR COUPLING THE PIPE TO A SECOND PIPE

(30) Priorité: 16.02.2015 FR 1551269
(43) Date de publication de la demande: 17.08.2016
(73) Titulaire: Wirquin Plastiques, 44470 Carquefou (FR)
(72) Inventeur: Le Coent, Daniel, 44470 Carquefou (FR); Rabesaotra, Paul, 44470 Carquefou (FR); Bacouet, Alban, 44980 Sainte Luce sur Loire (FR)
(74) Mandataire: Gicquel, Frédéric

(56) Documents cités:
- EP-A1- 1 865 243
- FR-A5- 2 129 222
- GB-A- 384 700
- GB-A- 1 008 313
- NL-A- 9 500 038
- US-A1- 2010 019 484

## Description

Le domaine de l'invention est celui de la conception et de la fabrication des équipements sanitaires, et en particulier celui de la conception de composants de tuyauterie d'un réseau sanitaire.

Les différents composants de la tuyauterie d'un réseau sanitaire peuvent être raccordés de différentes manières. Un organe de raccordement, selon le préambule de la revendication 1, est connu du document FR 2 129 222 A. On connaît dans l'art antérieur des raccords (ou liaisons) de type permanent pour lesquels les éléments sont fixés entre eux, par exemple au moyen de soudage ou de collage. La technique de fixation employée est dépendante des matériaux utilisés. Par exemple, pour les réseaux d'évacuation d'eau, les tuyaux en PVC sont utilisés en raison de leur légèreté et de leur relative aisance de mise en oeuvre. Ces tuyaux en PVC ne supportent pas le soudage et doivent ainsi être collés.

Un réseau d'évacuation d'eau peut aussi être constitué de raccords de type non permanent. En effet, il peut être désirable de disposer de raccords permettant une liaison réversible pour effectuer une maintenance du réseau sanitaire et, par exemple, pouvoir changer des éléments de ce réseau.

Dans la catégorie des raccords non permanents, l'art antérieur a notamment proposé des raccords de type serré, vissé ou encore emboîté.

Les raccords serrés peuvent consister, par exemple, en un tuyau souple inséré sur une sortie d'eau, la sortie d'eau prenant la forme d'un deuxième tuyau rigide. Le tuyau souple peut alors être solidarisé sur la sortie au moyen d'un élément annulaire extérieur (bague ou collier de serrage, etc.), entourant et serrant le tuyau souple au niveau de la sortie, de manière à comprimer le tuyau souple.

Ces raccords serrés présentent notamment les inconvénients suivants :
- la liaison peut être complexe à démonter en fonction du collier de serrage utilisé ;
- l'étanchéité n'est pas assurée lors d'un mauvais serrage de l'élément annulaire ;
- les composants risquent d'être abimés si le serrage de l'élément annulaire extérieur est trop énergique ;

Ce principe des raccords vissés est qu'un conduit présente une extrémité taraudée tandis que l'autre conduit possède une extrémité portant un filetage complémentaire.

Des personnes inexpérimentées peuvent avoir des difficultés à manipuler un tel raccord et en particulier à mettre en oeuvre rapidement un tel raccord. Cette inexpérience peut aussi créer un doute chez la personne au sujet du serrage nécessaire, de la qualité de l'installation terminée et de l'étanchéité du raccord notamment si le joint d'étanchéité n'a pas été changé.

L'art antérieur a aussi proposé des raccords rapides de type emboîté. Ce type de raccord consiste par exemple à emboîter un premier tuyau dans un deuxième tuyau d'un diamètre plus important en insérant en force le premier tuyau à travers un joint situé à l'intérieur du deuxième tuyau. On comprend que ce type de raccord est aisé et rapide à mettre en oeuvre et qu'il permet, en outre, d'être démonté aisément lors d'opérations de maintenance.

Cependant, ces raccords emboîtés présentes plusieurs inconvénients. En effet, la personne qui utilise ce type de raccords ne sait pas jusqu'à quelle profondeur il doit emboîter les éléments entre eux et/ou ne sait pas comment se comporte le joint en fonction de la profondeur d'emboîtement. Ainsi, il peut douter de l'efficacité du raccord (tenue dans le temps, étanchéité, ...).

L'invention a notamment pour objectif de pallier ces inconvénients de l'art antérieur.

Plus précisément, l'invention a pour objectif de proposer un organe de raccordement d'éléments d'un réseau sanitaire permettant de réaliser une liaison non permanente rapide et aisée à mettre en oeuvre.

L'invention a également pour objectif de proposer un tel organe de raccordement qui permette à l'installateur d'être assuré de la qualité de l'installation.

L'invention a encore pour objectif de proposer des dispositifs pourvus de tels organes de raccordement pour permettre à des personnes inexpérimentées de réaliser aisément et rapidement une installation d'un réseau sanitaire.

Ces objectifs, ainsi que d'autres qui apparaîtront par la suite, sont atteints grâce à l'invention qui a pour objet un organe de raccordement porté par un conduit, destiné à coupler le conduit à un deuxième conduit, l'organe de raccordement formant une cavité apte à recevoir le deuxième conduit et comportant :
- un joint circulaire ;
- un embout mobile entre au moins une position d'accueil et une position de verrouillage ;
- des moyens de compression du joint circulaire,
caractérisé en ce que le joint circulaire présente un diamètre interne susceptible de laisser librement mobile le deuxième conduit dans la position d'accueil de l'embout, et en ce que le déplacement de l'embout de la position d'accueil à la position de verrouillage entraîne une déformation radiale au moins centripète du joint circulaire par l'intermédiaire de moyens de compression comprenant un élément tronconique susceptible d'agir circonférentiellement sur le joint circulaire de façon à réduire le diamètre interne du joint circulaire en vue de le comprimer sur le deuxième conduit pour le retenir dans une position insérée à l'intérieur de la cavité, le joint circulaire étant porté par l'embout, en étant solidaire de l'embout, et comportant une lèvre s'étendant parallèlement à l'axe d'introduction du deuxième conduit dans la cavité, la lèvre ayant une face tronconique externe complémentaire de l'élément tronconique qui est porté par l'organe de raccordement à l'entrée de la cavité, et en ce que l'organe de raccordement comporte des moyens de retenue de l'embout sur le conduit destinés à permettre un clipsage de l'embout.

Ainsi, un organe de raccordement selon l'invention est porté par un conduit qui lui-même peut faire partie d'un élément de tuyauterie. Ce conduit peut par exemple être un tuyau, une section de tuyau ou encore une excroissance débouchant d'un réservoir. Par exemple et tel que cela est décrit ci-après, l'organe de raccordement selon l'invention peut faire partie d'un raccord ou d'une bonde de douche.

L'invention permet de réaliser efficacement une liaison non permanente entre deux conduits. En effet, le conduit portant l'organe de raccordement et le deuxième conduit peuvent être aisément et rapidement associés en déplaçant l'embout de la position d'accueil à la position de verrouillage. De façon analogue, les deux conduits peuvent être aisément et rapidement dissociés en déplaçant l'embout de la position de verrouillage à la position d'accueil.

On note que l'élément tronconique porté par la cavité et/ou l'embout permet de contribuer avantageusement à la déformation radiale centripète du joint circulaire. Cet élément tronconique présente ainsi une face dont l'inclinaison permet de contribuer à la réduction du diamètre interne du joint quand le joint est comprimé par ladite face.

Le joint circulaire a ainsi pour fonction, selon le principe de l'invention, à la fois de réaliser l'étanchéité et d'établir la liaison entre les différents éléments.

Les moyens de retenue permettent de créer un système de type « écrou prisonnier » quand l'embout est clipsé sur le conduit.

Un tel système est particulièrement aisé à mettre en oeuvre par une personne inexpérimentée. En effet, pour réaliser le raccord il suffit à l'installateur de clipser (ou d'emboîter) l'embout, d'insérer le deuxième conduit dans la cavité, puis finalement de déplacer l'embout de sa position d'accueil à sa position de verrouillage.

Grâce au joint circulaire porté par l'embout et solidaire de l'embout, le nombre de pièces détachées de l'invention est réduit ce qui permet d'obtenir un système d'apparence peu complexe et intuitif à mettre en oeuvre.

De plus, selon ces caractéristiques, le joint circulaire présente un positionnement optimisé dans l'organe de raccordement et ne risque pas de bouger et d'être mal positionné sous l'effet des contraintes résultant du déplacement de l'embout de sa position d'accueil à sa position de verrouillage.

Avantageusement, l'embout est mobile par vissage.

Un tel vissage permet une prise en main intuitive par l'utilisateur de l'organe de raccordement.

Selon un mode de réalisation préférentiel, le déplacement de la position d'accueil à la position de verrouillage est obtenu par un vissage de type quart de tour ou huitième de tour.

Un vissage de type quart de tour ou huitième de tour s'avère en pratique particulièrement aisé et rapide à mettre en oeuvre notamment par un installateur novice.

On peut comprendre qu'en restant dans le cadre de l'invention, l'embout peut, selon un autre mode de réalisation envisageable, être mobile au moyen d'un système de type baïonnette.

Selon une caractéristique avantageuse de l'invention, l'organe de raccordement comporte au moins une butée de verrouillage de l'embout.

Une telle butée de verrouillage présente plusieurs avantages.

Selon un premier aspect décrit plus en détails par la suite, cette butée de verrouillage permet de favoriser le maintien en position de verrouillage de l'embout. Ainsi, grâce à cette butée de verrouillage, l'embout ne peut pas se dégager seul hors de sa position de verrouillage, c'est-à-dire, en l'absence d'une action volontaire exercée par l'utilisateur lors du verrouillage ou du déverrouillage de l'organe de raccordement.

Selon un second aspect, un autre avantage de cette butée de verrouillage apparaît lors du verrouillage de l'organe de raccordement. En effet, lors du verrouillage, l'utilisateur doit déplacer l'embout de la position d'accueil à la position de verrouillage et doit ainsi faire passer l'embout par cette butée de mise en position. Le passage de cette butée procure un effet perceptible par l'utilisateur du fait de la résistance s'exerçant à l'encontre du passage jusqu'à la position de verrouillage. Cette modification de la résistance au déplacement est donc perçue par l'utilisateur qui est ainsi assuré que l'organe est en position verrouillée et que son installation est correctement réalisé.

Selon une autre caractéristique avantageuse, l'organe de raccordement comporte au moins une butée d'engagement du deuxième conduit à l'intérieur de la cavité.

La butée d'engagement permet à un utilisateur de ne pas se soucier de la distance à laquelle il doit enfoncer le deuxième conduit à l'intérieur de la cavité de l'organe de raccordement. En effet, il suffit à l'utilisateur d'enfoncer le deuxième conduit jusqu'à ressentir un blocage pour savoir que ce conduit est correctement inséré.

L'invention a aussi pour objet un dispositif de type raccord, caractérisé en ce qu'il comporte un conduit dont les deux extrémités portent chacune un organe de raccordement selon l'invention tel que décrit précédemment.

Un tel dispositif de type raccord permet de réaliser aisément et rapidement un raccord entre deux conduits d'un réseau d'eau sanitaire. De plus, ce type de dispositif permet un accès facilité aux différents éléments du réseau lors d'opération de maintenance.

L'invention a encore pour objet un dispositif de type bouchon, caractérisé en ce qu'il comporte un conduit fermé à une extrémité et portant sur l'autre extrémité un organe de raccordement selon l'invention tel que décrit précédemment.

Ce dispositif de type bouchon permet de boucher rapidement, proprement et de manière aisément réversible un conduit d'un réseau d'eau. On peut notamment citer les conduits destinés à recevoir une évacuation des eaux usées d'un lave-linge qui, quand les conduits ne sont pas reliés à un appareil, peuvent laisser remonter des odeurs si le système siphon n'est pas rempli d'eau.

D'autres caractéristiques et avantages de l'invention apparaîtront plus clairement à la lecture de la description suivante de plusieurs modes de réalisation préférentiels de l'invention, donnés à titre d'exemples illustratifs et non limitatifs, et des dessins annexés parmi lesquels :
- la figure 1 est une vue d'ensemble d'un organe de raccordement selon l'invention et de son embout ;
- les figures 2 à 4 sont des représentations schématiques d'organes de raccordement selon l'invention sans embouts, selon respectivement une coupe longitudinale, une vue de face et une vue latérale ;
- les figures 5 et 6, sont des représentations schématiques d'un embout selon l'invention, selon respectivement une vue de dessous et une vue d'ensemble ;
- les figures 7 et 8 sont des représentations schématiques d'un organe de raccordement selon l'invention, avec l'embout en position d'accueil, selon respectivement une vue latérale et une coupe longitudinale ;
- les figures 9 et 10 sont des représentations schématiques d'un organe de raccordement selon l'invention, avec l'embout en position de verrouillage, selon respectivement une vue latérale et une coupe longitudinale ;
- les figures 11 à 13 sont des vues d'ensemble de modes de réalisation préférentiels de dispositifs selon l'invention.

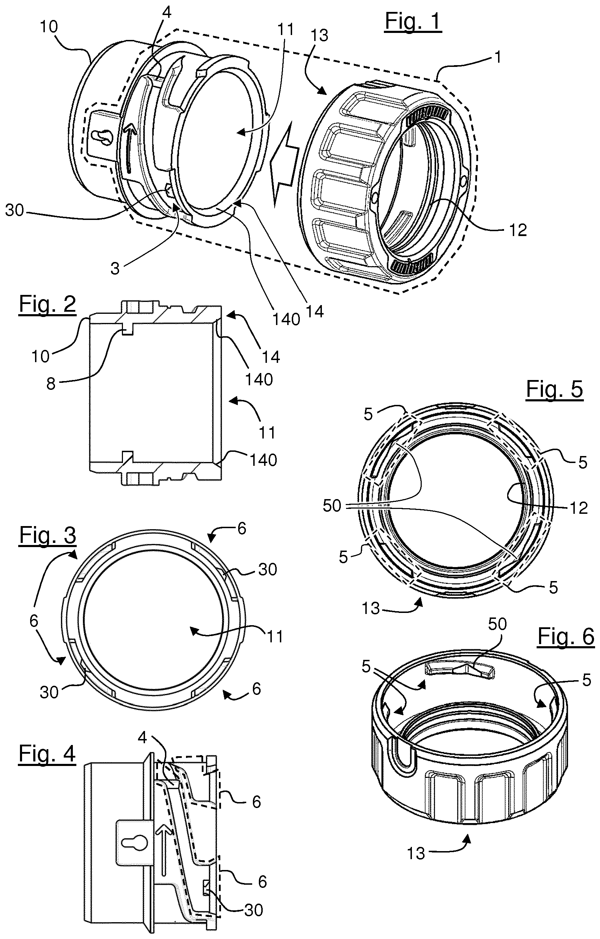

Tel que représenté sur la figure 1, un organe de raccordement 1 selon l'invention est porté par un conduit 10.

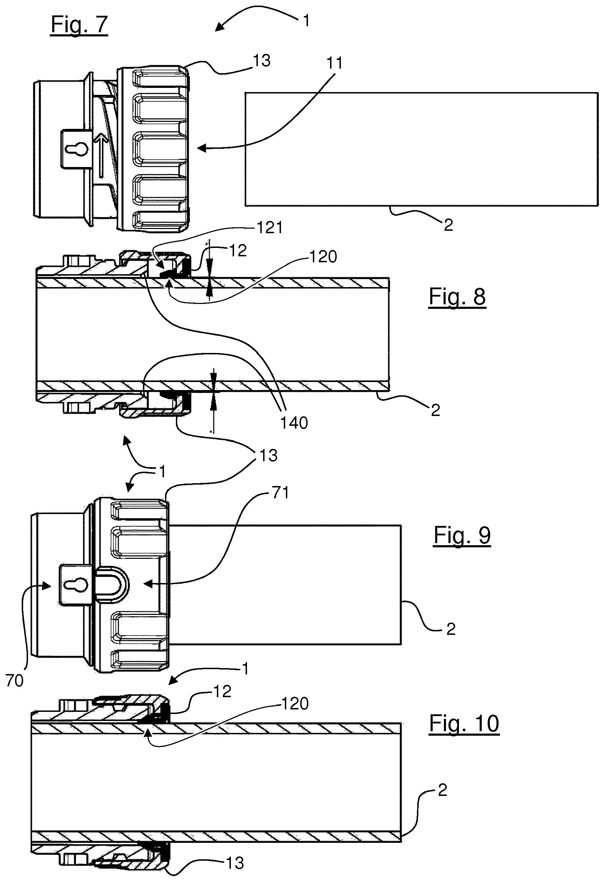

L'organe de raccordement forme une cavité 11 qui est apte et destinée à recevoir un deuxième conduit 2 (figures 7 et 8).

Cet organe de raccordement comporte un joint circulaire 12, un embout 13 et des moyens de compression 14 du joint circulaire.

L'embout 13 est mobile entre au moins une position d'accueil (figures 7 et 8) et une position de verrouillage (figures 9 et 10).

Le joint circulaire 12 présente un diamètre interne susceptible de laisser librement mobile le deuxième conduit 2 dans la position d'accueil de l'embout.

Ce joint circulaire 12 a pour fonction d'établir l'étanchéité et aussi de réaliser la liaison entre l'organe de raccordement et le deuxième conduit 2. En effet, le déplacement de l'embout de la position d'accueil à la position de verrouillage entraîne une déformation radiale au moins centripète du joint circulaire 12 par l'intermédiaire de moyens de compression 14, de façon à réduire le diamètre interne du joint circulaire 12 en vue de le comprimer sur le deuxième conduit 2 pour le retenir dans une position insérée à l'intérieur de la cavité 11.

Tel qu'illustré par la figure 2, les moyens de compression 14 comprennent un élément tronconique 140 porté par l'organe de raccordement à l'entrée de la cavité. Un tel élément tronconique permet de favoriser la déformation radiale au moins centripète du joint circulaire en étant susceptible d'agir circonférentiellement sur le joint circulaire.

Suivant les modes de réalisation préférentiels de l'organe de raccordement illustrés par les figures 1 à 10, l'embout est mobile par vissage. L'embout comporte plus particulièrement des pas de vis partiels 5 complémentaires de filets 6 de l'organe de raccordement.

Les pas de vis partiels 5 sont portés sur une face interne de l'embout 13 et sont notamment au nombre de quatre.

Selon la figure 5, on retrouve les quatre pas de vis partiels 5 portés par l'embout 13.
Tel que l'on peut l'observer, les pas de vis partiels sont formés par des excroissances et, suivant une projection sur le même plan illustré par la figure 5, présentent des profils :
- s'étendant respectivement sur une section de la circonférence de l'embout ;
- ne se chevauchant pas les uns par rapport aux autres.

Selon une caractéristique avantageuse illustrée par la figure 1, l'organe de raccordement comporte des moyens de retenue 3 de l'embout 13 sur le conduit 10, destinés à permettre un clipsage de l'embout 13.

Préférentiellement et tel qu'illustré par les figures 1, 3 et 4, les moyens de retenue 3 prennent la forme d'au moins une dent 30.

Les dents 30 sont situées à l'entrée des filets 6. Ainsi, l'embout est clipsé (ou emboîté) de force en position d'accueil en forçant le passage de pas de vis partiels 5 (visibles sur les figures 5 et 6) par-dessus les dents 30. Ces moyens de retenue permettent ensuite de former un obstacle allant à l'encontre d'un désemboîtement (ou déclipsage) de l'embout 13 de sa position d'accueil (en l'absence d'une action volontaire exercée par un utilisateur).

Les pas de vis partiels peuvent présenter des sections de longueurs différentes. Ainsi conçus, ces pas de vis partiels présentent une fonction de « détrompeurs » et permettent de guider et faciliter l'emboîtement de l'embout. Tel que représenté sur la figure 9, la fonction de « détrompeurs » permet d'utiliser des repères visuels 70, 71, placés à des endroits prédéterminés, indiquant si l'embout est dans sa position de verrouillage (repères alignés).

Les pas de vis partiels et les filets sont réalisés de manière à ce que le déplacement de la position d'accueil à la position de verrouillage soit obtenu par un vissage de type quart de tour ou huitième de tour.

Tel qu'illustré par les figures 7 à 10, selon le présent mode de réalisation préférentiel de l'organe de raccordement comporte un embout mobile par un vissage de type quart de tour. Un tel vissage est particulièrement aisé et rapide à réaliser, notamment dans un espace restreint et/ou par une personne inexpérimentée.

Par ailleurs, l'organe de raccordement comporte au moins une butée de mise en position de verrouillage 4 de l'embout 13.

Tel qu'illustré par les figures 1 et 4, ces butées de mise en position de verrouillage 4 sont situées dans les filets 6 de l'organe de raccordement et exercent ainsi une résistance au passage des pas de vis partiels lors du déplacement de l'embout 13 en position de verrouillage et hors de sa position de verrouillage.

En l'occurrence et tel que cela peut être observé sur les figures 5 et 6, des pas de vis partiels 5 comportent des encoches 50. Ces encoches 50 sont complémentaires des butées de mise en position de verrouillage 4. Ainsi, la position de verrouillage correspond à la position dans laquelle les butées de mise en position de verrouillage prennent place à l'intérieur des encoches 50.

Les butées de mise en position exercent ainsi une résistance allant à l'encontre d'un déplacement de l'embout lors d'un verrouillage ou d'un déverrouillage de l'organe de raccordement. Tel qu'expliqué précédemment, cette résistance permet ainsi de sécuriser l'embout en position de verrouillage ou d'informer l'installateur que la position de verrouillage a été atteinte. Le verrouillage de l'organe de raccordement est alors effectif.

Selon une caractéristique préférentielle illustrée par la figure 2, l'organe de raccordement comporte au moins une butée d'engagement 8 du deuxième conduit à l'intérieur de la cavité.

Cette butée peut par exemple prendre la forme d'un épaulement du diamètre interne de la cavité contre lequel l'extrémité du deuxième conduit vient en butée. Le deuxième conduit peut ainsi être engagé dans la cavité jusqu'à cet épaulement qui peut ainsi marquer une distance d'engagement optimale du deuxième conduit.

Tel qu'illustré par les figures 8 et 10, le joint circulaire est porté par l'embout et est solidaire de ce dernier. Selon le mode de réalisation préférentiel illustré, le joint circulaire 12 est solidaire de l'embout en étant surmoulé dans l'embout 13. Selon un autre mode de réalisation non illustré, le joint circulaire peut être solidaire de l'embout en étant collé à l'intérieur de l'embout.

Le joint circulaire 12 comporte une lèvre 120 s'étendant parallèlement à l'axe d'introduction du deuxième conduit 2 dans la cavité 11. La lèvre 120 a une face tronconique externe 121 complémentaire de l'élément tronconique 140 porté par l'organe de raccordement à l'entrée de la cavité. Cette face tronconique externe est particulièrement adaptée pour coopérer avec les moyens de compression pour favoriser une déformation radiale centripète du joint.

La figure 1 et les figures 7 à 10 illustrent le principe de fonctionnement de l'organe de raccordement selon l'invention.

Dans un premier temps, l'embout est emboîté dans sa position d'accueil (figures 1 et 7).

Le deuxième conduit 2 est ensuite déplacé d'une position d'approche (figure 7) à une position insérée (figure 8). Tel qu'illustré par la figure 8, le deuxième conduit 2 est inséré dans la cavité 11 mais reste librement mobile. En effet, l'embout 13 étant en position d'accueil, les moyens de compression 14 ne déforment pas le joint circulaire qui présente alors un diamètre interne plus important que le diamètre externe du deuxième conduit 2.

Sur les figures 9 et 10, l'embout est en position de verrouillage après avoir été vissé sur un quart de tour. Le vissage de l'embout se traduit ainsi par un déplacement de l'embout 13 en suivant les pas de vis partiels, par le rapprochement du joint circulaire 12 porté par l'embout de l'élément tronconique 140, et par l'alignement des repères visuels 70, 71.

Tel que l'on peut l'observer sur la figure 10, la lèvre 120 du joint circulaire 12 est comprimée sur le deuxième conduit 2 et retient ledit conduit dans une position insérée à l'intérieur de la cavité.

En effet, le déplacement de l'embout 13 de la position d'accueil à la position de verrouillage permet d'amener l'élément tronconique 140 en contact avec la lèvre 120 du joint circulaire 12 et de comprimer circonférentiellement cette lèvre pour la déformer radialement de manière centripète permettant ainsi de la serrer sur le deuxième conduit.

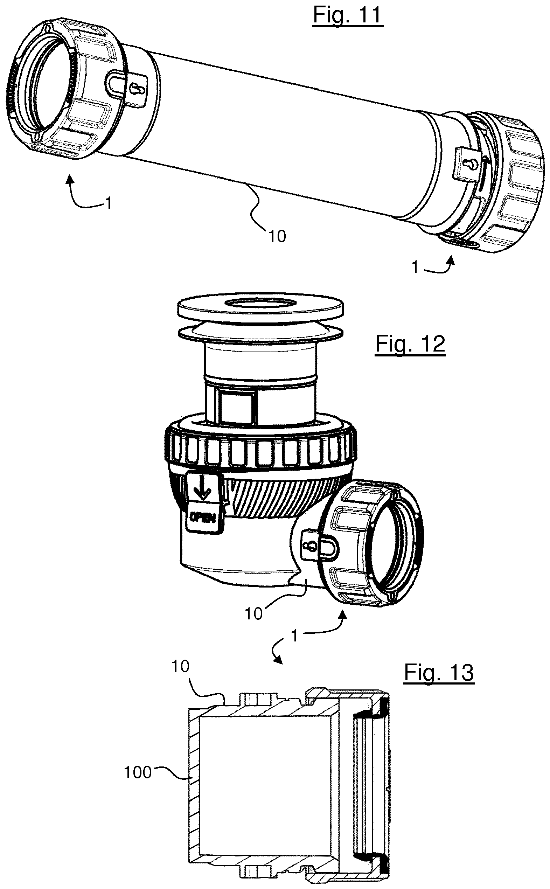

Tel que représenté par la figure 11, l'invention s'applique à un dispositif de type raccord, comportant un conduit 10 dont les deux extrémités portent chacune un organe de raccordement 1 tel que défini précédemment.

Préférentiellement, le dispositif de type raccord selon l'invention est en un matériau de type PVC présentant une dureté de 90 Shores. Une telle dureté permet une légère flexibilité du dispositif facilitant ainsi les emboîtements et les assemblages dans un réseau sanitaire. Bien évidemment, le conduit 10 peut être également réalisé en un matériau de type plastique rigide.

Tel que représenté par la figure 12, l'invention s'applique aussi à un dispositif de type bonde de douche, comportant un conduit 10 portant un organe de raccordement 1 tel que défini précédemment.

Tel qu'illustré par la figure 13, l'invention s'applique encore à un dispositif de type bouchon. Ce dispositif de type bouchon présente un conduit 10 qui est fermé à une extrémité par une paroi 100 et qui porte sur son autre extrémité un organe de raccordement 1.

On comprend que de tels dispositifs peuvent être rapidement et aisément raccordés dans un réseau sanitaire et ce même par une personne inexpérimentée.

## Revendications

1. Organe de raccordement (1) adapté à être porté par un conduit (10), destiné à coupler le conduit (10) à un deuxième conduit (2), l'organe de raccordement formant une cavité (11) apte à recevoir le deuxième conduit (2) et comportant :
- un joint circulaire (12) ;
- un embout (13) mobile entre au moins une position d'accueil et une position de verrouillage ;
- des moyens de compression (14) du joint circulaire, le joint circulaire (12) présentant un diamètre interne susceptible de laisser librement mobile le deuxième conduit dans la position d'accueil de l'embout,
et le déplacement de l'embout de la position d'accueil à la position de verrouillage entraînant une déformation radiale au moins centripète du joint circulaire (12) par l'intermédiaire de moyens de compression (14) comprenant un élément tronconique (140) susceptible d'agir circonférentiellement sur le joint circulaire de façon à réduire le diamètre interne du joint circulaire en vue de le comprimer sur le deuxième conduit pour le retenir dans une position insérée à l'intérieur de la cavité, **caractérisé en ce que** le joint circulaire (12) est porté par l'embout (13), en étant solidaire de l'embout, et comporte une lèvre (120) s'étendant parallèlement à l'axe d'introduction du deuxième conduit (2) dans la cavité (11), la lèvre (120) ayant une face tronconique externe (121) complémentaire de l'élément tronconique (140) qui est porté par l'organe de raccordement à l'entrée de la cavité,
et **en ce que** l'organe de raccordement comporte des moyens de retenue (3) de l'embout (13) sur le conduit destinés à permettre un clipsage de l'embout.

2. Organe de raccordement selon la revendication 1, **caractérisé en ce que** l'embout est mobile par vissage.

3. Organe de raccordement selon la revendication 2, **caractérisé en ce que** le déplacement de la position d'accueil à la position de verrouillage est obtenu par un vissage de type quart de tour ou huitième de tour.

4. Organe de raccordement selon l'une quelconque des revendications précédentes, **caractérisé en ce qu'**il comporte au moins une butée de mise en position de verrouillage (4) de l'embout (13).

5. Organe de raccordement selon l'une quelconque des revendications précédentes, **caractérisé en ce qu'**il comporte au moins une butée d'engagement (8) du deuxième conduit (2) à l'intérieur de la cavité (11).

6. Organe de raccordement selon l'une quelconque des revendications précédentes, **caractérisé en ce que** le joint circulaire (12) est solidaire de l'embout en étant surmoulé dans l'embout (13).

7. Organe de raccordement selon l'une quelconque des revendications 1 à 5, **caractérisé en ce que** le joint circulaire (12) est solidaire de l'embout en étant collé à l'intérieur de l'embout (13).

8. Dispositif de type raccord, **caractérisé en ce qu'**il comporte un conduit (10) dont les deux extrémités portent chacune un organe de raccordement (1) selon l'une quelconque des revendications 1 à 7.

9. Dispositif de type bouchon, **caractérisé en ce qu'**il comporte un conduit (10) fermé à une extrémité et portant sur l'autre extrémité un organe de raccordement selon l'une quelconque des revendications 1 à 7.

## Patentansprüche

1. Anschlussorgan (1), das ausgeführt ist, um von einem Kanal (10) getragen zu werden, dazu bestimmt, um den Kanal (10) mit einem zweiten Kanal (2) zu verbinden, wobei das Anschlussorgan einen Hohlraum (11) bildet, der imstande ist, den zweiten Kanal (2) aufzunehmen, und umfassend:
- eine kreisförmige Dichtung (12);
- ein Ansatzstück (13), das zwischen zumindest einer Aufnahmeposition und einer Verriegelungsposition beweglich ist;
- Mittel zum Zusammendrücken (14) der kreisförmigen Dichtung, wobei die kreisförmige Dichtung (12) einen Innendurchmesser aufweist, der geeignet ist, den zweiten Kanal in der Aufnahmeposition des Ansatzstückes frei beweglich zu lassen,
und wobei die Bewegung des Ansatzstücks von der Aufnahmeposition in die Verriegelungsposition zu einer zumindest zentripetalen radialen Verformung der kreisförmigen Dichtung (12) durch die Mittel zum Zusammendrücken (14) führt, die ein kegelstumpfförmiges Element (140) umfassen, das geeignet ist, im Umfang auf die kreisförmige Dichtung einzuwirken, um den Innendurchmesser der kreisförmigen Dichtung im Hinblick darauf zu verringern, sie auf dem zweiten Kanal zusammenzudrücken, um ihn in einer eingeführten Position im Inneren des Hohlraumes zurückzuhalten, **dadurch gekennzeichnet, dass** die kreisförmige Dichtung (12) durch das Ansatzstück (13) getragen wird, indem sie fest mit dem Ansatzstück verbunden ist, und eine Lippe (120) umfasst, die sich parallel zur Einführungsachse des zweiten Kanals (2) in den Hohlraum (11) erstreckt, wobei die Lippe (120) eine kegelstumpfförmige Außenfläche (121) ergänzend zum kegelstumpfförmigen Element (140) aufweist, das durch das Anschlussorgan am Eingang des Hohlraumes getragen wird, und dadurch, dass das Anschlussorgan Mittel zum Rückhalten (3) des Ansatzstückes (13) auf dem Kanal umfasst, die dazu bestimmt sind, ein Klippen des Ansatzstücks zu erlauben.

2. Anschlussorgan nach Anspruch 1, **dadurch gekennzeichnet, dass** das Ansatzstück durch Verschrauben beweglich ist.

3. Anschlussorgan nach Anspruch 2, **dadurch gekennzeichnet, dass** die Bewegung von der Aufnahmeposition in die Verriegelungsposition durch eine Verschraubung in der Art einer Vierteldrehung oder Achteldrehung erhalten wird.

4. Anschlussorgan nach einem der vorhergehenden Ansprüche, **dadurch gekennzeichnet, dass** es zumindest einen Anschlag zur Verriegelungspositionierung (4) des Ansatzstücks (13) umfasst.

5. Anschlussorgan nach einem der vorhergehenden Ansprüche, **dadurch gekennzeichnet, dass** es zumindest einen Einführungsanschlag (8) für den zweiten Kanal (2) ins Innere des Hohlraumes (11) umfasst.

6. Anschlussorgan nach einem der vorhergehenden Ansprüche, **dadurch gekennzeichnet, dass** die kreisförmige Dichtung (12) fest mit dem Ansatzstück verbunden ist, indem sie im Ansatzstück (13) eingegossen ist.

7. Anschlussorgan nach einem der Ansprüche 1 bis 5, **dadurch gekennzeichnet, dass** die kreisförmige Dichtung (12) fest mit dem Ansatzstück verbunden ist, indem sie im Inneren des Ansatzstücks (13) eingeklebt ist.

8. Vorrichtung in der Art eines Anschlusses, **dadurch gekennzeichnet, dass** sie einen Kanal (10) umfasst, dessen beiden Enden jeweils ein Anschlussorgan (1) nach einem der Ansprüche 1 bis 7 tragen.

9. Vorrichtung in der Art eines Stopfens, **dadurch gekennzeichnet, dass** sie einen Kanal (10) umfasst, der an einem Ende geschlossen ist und an dem anderen Ende ein Anschlussorgan nach einem der Ansprüche 1 bis 7 trägt.

## Claims

1. Connection member (1) suitable for being supported by a pipe (10), intended to couple the pipe (10) to a second pipe (2), the connection member forming a cavity (11) capable of receiving the second pipe (2) and comprising:
- a circular gasket (12);
- a movable locking tip (13) capable of moving between a receiving position and a locking position;
- compression means (14) for compressing the circular gasket,
the circular gasket (12) having an inner diameter that is capable of allowing the second pipe to move freely in the receiving position of the tip,
and the movement of the tip from the receiving position to the locking position resulting in a radial deformation that is at least centripetal of the circular gasket (12) via compression means (14) comprising a frustoconical element (140) capable of acting circumferentially on the circular gasket so as to reduce the inner diameter of the circular gasket in view of the compressing thereof on the second pipe in order to retain it in a position inserted inside the cavity, **characterised in that** the circular gasket (12) is supported by the tip (13), by being integral with the tip, and comprises a lip (120) extending parallel to the insertion axis of the second pipe (2) in the cavity (11), the lip (120) having an outer frustoconical side (121) that complements the frustoconical element (140) that is supported by the connection member at the cavity entry,
and **in that** the connection member comprises holding means (3) for holding the tip (13) on the pipe intended to allow the tip to be clipped thereto.

2. Connection member according to claim 1, **characterised in that** the tip is capable of moving by screwing.

3. Connection member according to claim 2, **characterised in that** the movement from the receiving position to the locking position is obtained by screwing one quarter turn or one eighth turn.

4. Connection member according to any of the previous claims, **characterised in that** it comprises at least one abutment (4) for positioning the tip (13) in the locking position.

5. Connection member according to any of the previous claims, **characterised in that** it comprises at least one abutment (8) for engaging the second pipe (2) inside the cavity (11).

6. Connection member according to any of the previous claims, **characterised in that** the circular gasket (12) is integral with the tip, by being cast moulded in the tip (13).

7. Connection member according to any of claims 1 to 5, **characterised in that** the circular gasket (12) is integral with the tip, by being bonded inside the tip (13).

8. Connector-type device, **characterised in that** it comprises a pipe (10), the two ends of which each support a connection member (1) according to any of claims 1 to 7.

9. Plug-type device, **characterised in that** it comprises a pipe (10), one end of which is closed, and the other end of which supports a connection member according to any of claims 1 to 7.
